# EUROPEAN PATENT APPLICATION

(11) **EP 3 957 413 A1**
(43) Date of publication of application: **23.02.2022**
(21) Application number: 20791003.5
(22) Date of filing: 03.04.2020
(51) Int. Cl.: B21L 9/02, C25D 5/26, F16G 13/02, F16G 13/06

(54) **JOINT PIN FOR CHAIN, AND METHOD FOR MANUFACTURING SAME**

(30) Priority: 16.04.2019 JP 2019077761
(71) Applicant: Daido Kogyo Co., Ltd., Kaga-shi, Ishikawa 922-8686 (JP)
(72) Inventor: HAYASHI, Kohei, Kaga-shi, Ishikawa 922-8686 (JP)
(74) Representative: TBK
(86) International application number: PCT/JP2020/015430
(87) International publication number: WO 2020/213441

(57) **Abstract**

Copper plating (D) is applied on the entire pin material having not less than 0.5% and not more than 0.6% C and hardness of not less than 550 HV and not more than 750 HV An outer circumferential surface of a tip part (B) of the pin material is cut to remove the copper plating therefrom, and a counterbore hole (19) for swaging is formed. The pin material is subjected to decarburizing treatment to diffuse carbon from the outer circumferential surface of the tip part, and is subjected to heat treatment to disperse carbon over the entire tip part (B) and reduce the hardness of the tip part (B) (not less than 500 HV and not more than 650 HV). The copper plating on the joint pin 13 is peeled off by grinding.

## Description

### TECHNICAL FIELD

The present invention relates to a joint pin for connecting a chain such as a roller chain and a manufacturing method thereof.

### BACKGROUND ART

In a general roller chain for driving a motorcycle to travel, when the roller chain is elongated by usage and the number of links is adjusted, the chain being used is cut, its number of links is adjusted, and then the chain is connected in an endless fashion by a joint link in a state where the chain is wound around a drive sprocket and a driven sprocket. In another case, when a roller chain being used wears and becomes unusable, the roller chain is replaced with a new roller chain, and this new roller chain is connected in an endless fashion by a joint link in a state where the chain is wound around a drive sprocket and a driven sprocket.

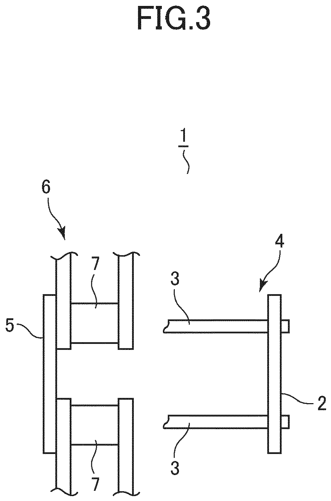

As illustrated in Fig. 3, this joint link 1 includes: a leg-raised plate 4 formed by providing joint pins 3, 3 standing on both end parts of a joint plate 2; and one outer plate 5. The joint pins 3 of the leg-raised plate 4 are inserted into bushes 7, 7 on both ends of a roller chain 6 with ends, and protrude respectively from pin holes of the above outer plate 5 disposed so as to connect end parts of the above roller chain 6 to each other. Then, tip parts of the protruding joint pins 3, 3 are swaged, whereby the roller chain 6 is connected in an endless fashion.

Conventionally, such joint pin 3 uses carburized steel of the same type as used in a chain body, a hole is formed in a portion of the pin to be swaged in order to facilitate deformation at the time of swaging, and through heat treatment, the pin is subjected to carburizing and hardening as applied on a pin of the chain body. For this reason, a portion of the joint pin at or near the portion to be swaged is subjected to pretreatment for preventing carburization, i.e., treatment for preventing surface hardening such as copper plating in advance before carburizing and hardening, which makes the portion at or near the portion to be swaged has a lower hardness level than other portions and easy to deform.

The joint pin 3 is subjected to punching by a straight line-shaped punch having a mound-shaped end surface so that an end surface of the portion of the joint pin 3 to be swaged may be swaged. Since the portion to be swaged (to-be-swaged part) is set to have low hardness, it can be easily deformed and swaged.

However, since no carburizing treatment is applied on the to-be-swaged part of the joint pin, it has lower hardness than the chain body and a portion of the joint pin other than the to-be-swaged part. For this reason, only the portion of the pin to be swaged in the joint link has low strength, so that the durability of the joint pin is deteriorated.

Note that, in the case of using high-carbon steel as the above joint pin 3, even if copper plating is applied on the portion to be swaged to prevent carburizing and hardening, failure such as cracks sometimes occurs at the tip part of the joint pin at the time of swaging treatment because the joint pin itself is of high hardness containing a large amount of carbon.

Against this background, a joint pin whose inner and outer surfaces have uniform hardness of HRC 45 or greater is proposed (see Patent Literature 1), which is obtained in such a way that: a structural material of a joint pin of a joint link is made of high-tensile steel as used in a pin for a chain body, i.e., steel added with 0.3% or more carbon and various alloy elements; predetermined holes are formed in a portion of the joint pin material to be swaged made of the high-tensile steel; and the entire joint pin material including the portion to be swaged is subjected to hardening other than surface hardening treatment such as austempering.

### CITATION LIST

### PATENT LITERATURE

Patent Literature 1: Japanese Patent Application Laid-Open No. S52-6860

### SUMMARY OF THE INVENTION

### TECHNICAL PROBLEM

In the joint pin of Patent Literature 1 above, the entire pin has predetermined hardness. Thus, this can keep the strength of the joint pin, but the portion to be swaged also has the same hardness. For this reason, even if the tip of the pin is swaged using a punch having a truncated conical shape, cracks and the like might occur at the swaging portion of the pin, which might pose a problem in the durability of the joint link.

### SOLUTIONS TO THE PROBLEM

The present invention provides a joint pin that is made of high-carbon steel with high hardness and prevent occurrence of cracks due to swaging by decarburizing a portion to be swaged.

A joint pin (13) of a chain of the present invention for connecting both end parts of the chain in an endless fashion, the joint pin includes
a tip part (B) including
   a tip surface (30) in an axial direction of the joint pin (13), and
   a hole (19) for swaging formed in the tip surface (30), and
a body part (A) other than the tip part (B), wherein
the tip part (B) has hardness of not less than 500 [HV] and not more than 650 [HV], and
the body part (A) is constituted of carbon steel with not less than 0.5 [%] and not more than 0.6 [%] carbon and has hardness of not less than 550 [HV] and not more than 750 [HV].

The body part (A) includes a first outer diameter (L1), and
the tip part (B) includes a small diameter part (20a) having a second outer diameter (L2) smaller than the first outer diameter (L1).

The small diameter part (20a) is formed by cutting treatment.

A central portion in a radial direction of the body part contains not less than 0.5 [%] and not more than 0.6 [%] carbon.

A method of manufacturing a joint pin of a chain of the present invention for connecting both end parts of the chain in an endless fashion, the method includes
a plating step of plating (D) the entire pin material made of high-carbon steel with not less than 0.5 [%] and not more than 0.6 [%] carbon,
a cutting step of cutting and removing the plating on an outer circumferential surface of a tip part (B) in an axial direction (AD) of the plated pin material, and forming a hole (19) in a tip surface (30) in the axial direction of the pin material,
a decarburizing step of subjecting the pin material to decarburizing treatment to diffuse carbon from the outer circumferential surface of the tip part (B) of the pin material from which the plating has been removed, and subjecting the pin material to heat treatment to reduce the amount of carbon at the tip part (B) of the pin material and reduce hardness thereof, and
a grinding step of grinding an outer circumferential surface of a portion (A) of the pin material other than the tip part (B) to peel off the plating from the pin material.

Copper plating is applied in the plating step.

In the cutting step, any of a concave groove and a small diameter part (20a) is formed in the outer circumferential surface of the tip part of the pin material.

To be noted, the parenthesized reference signs described above are for contrasting with the drawings, and should not affect the claims in any way.

### EFFECTS OF THE INVENTION

According to the present invention as defined in claim 1, the tip part of the joint pin has hardness of not less than 500 [HV] and not more than 650 [HV] which is lower than that of the body part. Thus, when the joint pin is swaged by inserting a jig into the hole for swaging, the pin can be swaged properly without cracks due to swaging. The body part of the joint pin is constituted of high-carbon steel containing not less than 0.5 [%] and not more than 0.6 [%] carbon and having hardness of not less than 550 [HV] and not more than 750 [HV] and therefore has high strength and anti-abrasion performance. Thus, it is possible to prevent the joint pin from coming off and being deformed due to failure in swaging of the chain that is connected by the joint pin, and improve the tensile strength and durability of the chain.

According to the present invention as defined in claim 2, since the tip part of the joint pin includes the small diameter part, the joint pin can be inserted into a pin hole of an outer plate easily, and can be reliably fitted into the pin hole by swaging.

According to the present invention as defined in claim 3, since the small diameter part is formed by cutting treatment, plating applied on, for example, the tip part of the joint pin is removed, so that its base material can be exposed for later surface treatment.

According to the present invention as defined in claim 4, since the central portion of the body part also contains not less than 0.5 [%] and not more than 0.6 [%] carbon, it is possible to improve the strength and anti-abrasion performance of the joint pin.

According to the present invention as defined in claim 5, by the method of manufacturing a joint pin including the plating step, the cutting step, the decarburizing step, and the grinding step, although the joint pin uses a high-hardness steel member made of high-carbon steel, only the tip part of the joint pin is decarburized to form therein a portion to be swaged having uniform and comparatively low hardness, thus making it possible to perform swaging treatment properly and reliably without causing cracks due to swaging and the like.

According to the present invention as defined in claim 6, by using copper plating in the plating treatment, the pin material can be coated correctly without pinholes and the like relatively easily, thereby making it possible to prevent the decarburizing treatment from affecting portions other than the tip part.

According to the present invention as defined in claim 7, it is possible to form, in the cutting step, the concave groove or the small diameter part in the outer circumferential surface of the tip part of the pin material easily in the plating removing work.

Other features and advantages of the present invention will become more apparent in the following description with reference to the appended drawings. Note that, in the appended drawings, those having the same or similar configuration are assigned the same reference sign.

### BRIEF DESCRIPTION OF THE DRAWINGS

[Fig. 1A] Fig. 1A is a plan view illustrating a joint link according to the present invention.
[Fig. 1B] Fig. 1B is a plan view illustrating a joint pin.
[Fig. 2A] Fig. 2A is a view illustrating a plating process in a method of manufacturing the joint pin according to the present invention.
[Fig. 2B] Fig. 2B is a view illustrating a cutting process in the method of manufacturing the joint pin.
[Fig. 2C] Fig. 2C is a view illustrating a decarburizing process in the method of manufacturing the joint pin.
[Fig. 2D] Fig. 2D is a view illustrating a grinding process in the method of manufacturing the joint pin.
[Fig. 3] Fig. 3 is a plan view illustrating connection of a roller chain with the joint link.

### DESCRIPTION OF EMBODIMENTS

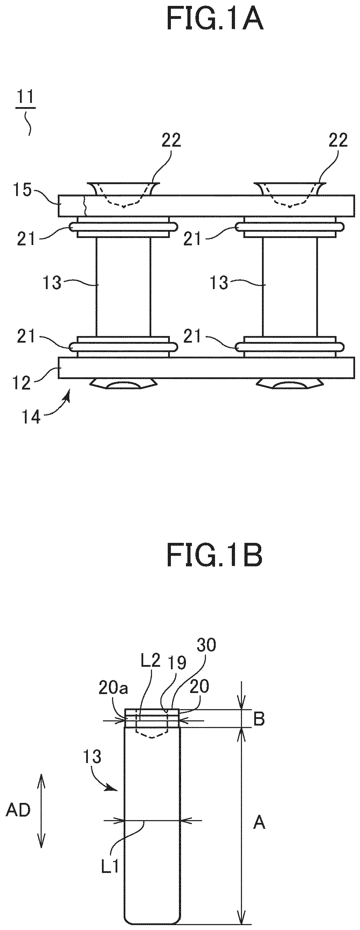

Hereinbelow, an embodiment of the present invention is described according to the drawings. As illustrated in Figs. 1A and 1B, a joint link 11 includes a raised plate 14 and one outer plate 15. The raised plate 14 is formed by press-fitting and securing joint pins 13, 13 to both end parts of a joint plate 12 constituted of one outer plate so that the joint pins do not come off. A counterbore hole 19 for swaging is formed in a tip surface 30 of each of the above joint pins 13 in its axial direction AD, and an outer circumferential surface of a tip part B of the joint pin 13 has a cutting part 20 that is cut. A shallow concave groove 20a is preferably formed in the cutting part 20. The concave groove 20a as a small diameter part has a smaller outer diameter than an outer diameter of a body part A being a portion of the joint pin 13 other than the tip part B. In other words, the body part A has a first outer diameter L1, and the concave groove 20a in the tip part B has a second outer diameter L2 smaller than the first outer diameter L1. The body part A has the first outer diameter L1 particularly in its central portion in the axial direction AD. Alternatively, the cutting part 20 in the tip part B may have a small diameter part, having a smaller outer diameter than the first outer diameter L1, throughout the entire area of the tip part B in the axial direction AD. In a state where the above outer plate 15 is disposed so as to be connected to both ends of a roller chain with ends, the joint link 11 connects the roller chain in an endless fashion by the following processes. Specifically, both of the joint pins 13, 13 of the above raised plate 14 are inserted into bushes at both ends of the above roller chain so as to protrude from pin holes of the above outer plate 15. Then, a punch having a truncated conical shape is inserted into the counterbore hole 19 formed at the tip of each protruding pin, whereby the pin is swaged as swaging 22. Due to its relatively low hardness and the counterbore hole 19, the above swaging 22 is performed precisely without damages such as a crack. Note that, in the above joint link 11, seal rings 21 are fitted around each joint pin 13 so as to surround the joint pin and to be adjacent to the above joint plate 12 and outer plate 15, respectively.

Each of the above joint pins 13 is made of high-carbon steel containing not less than 0.5% and not more than 0.6% carbon (C), and has Vickers hardness of not less than 550 [HV] and not more than 750 [HV]. The hardness of the body part A being the portion of the joint pin 13 other than the tip part B to be swaged is not less than 550 [HV] and not more than 750 [HV] being the hardness of a joint pin material, while the hardness of the tip part B where the cutting part 20 is formed is reduced to not less than 500 [HV] and not more than 650 [HV] by decarburizing treatment to be described below. Note that, since no decarburizing treatment is applied on the body part A, not only an outer circumferential part of its base material but also a central portion in a radial direction thereof contain not less than 0.5% and not more than 0.6% carbon (C). This can enhance the strength and anti-abrasion performance of the entire body part A and increase the durability thereof as compared to the case where only the surface thereof is subjected to surface hardening heat treatment such as carburizing and hardening treatment, for example. In addition, this prevents warp due to surface hardening heat treatment, so that a highly precise joint pin can be achieved.

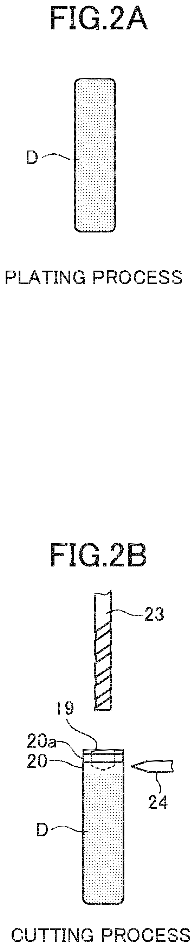

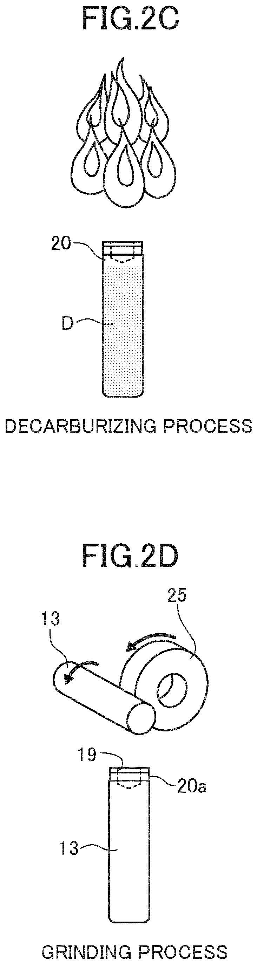

Next, a method of manufacturing the above joint pins is described according to Figs. 2Ato 2D. As described previously, a material of each joint pin 13 is made of steel containing carbon by not less than 0.5% and not more than 0.6% and having hardness of not less than 550 [HV] and not more than 750 [HV], and this pin material is subjected to plating treatment in which copper plating D is applied on the entire pin material (plating process), as illustrated in Fig. 2A. Note that, the plating process is performed in order to block decarburizing treatment to be described below, and copper plating by which the material can be coated correctly without pinholes and the like relatively easily is preferably used, but another plating may be used instead. As illustrated in Fig. 2B, cutting treatment (cutting process) is applied on a tip part of the pin material subjected to the copper plating. In the cutting process, the copper plating D on the outer circumferential surface of the tip part of the pin is cut and removed by a tool bit 24, thus generating the cutting part 20 where the surface of the pin material at the tip part B is exposed. In this event, the shallow concave groove 20a or a slightly small diameter part may be formed in the cutting part 20 by cutting. Further, the counterbore hole 19 having a predetermined depth and a predetermined width is formed in the tip surface of the pin with a drill 23. Note that, in the cutting process, it is preferable that the copper plating on the tip surface of the pin be also removed for later surface treatment. In addition, a bottom part of the cutting part 20 in the outer circumferential surface of the tip part of the pin from which the above copper plating D is removed and the counterbore hole 19 portion are arranged at substantially the same position in the axial direction AD of the joint pin 13.

In this state, as illustrated in Fig. 2C, the decarburizing treatment such as heat treatment in oxygen environment is performed (decarburizing process). The decarburizing process is performed only in the cutting part 20 in the outer circumferential surface of the tip part of the pin from which the above copper plating D has been removed, and typical heat treatment such as hardening and annealing is further applied thereon. Thereby, carbon is combined with oxygen and diffused from the above cutting part 20, and through the typical heat treatment described above, carbon at the tip part B not having been decarburized is dispersed and the amount of carbon at the tip part B is reduced uniformly in its entirety in the radial thickness direction, whereby its hardness is reduced by a predetermined amount (not less than 500 [HV] and not more than 650 [HV]). Note that, since the portion, other than the tip of the pin, where the copper plating D is applied (see the part A in Fig. 1B) is subjected to no surface decarburizing treatment, this part is subjected to heat treatment with its amount of carbon being kept (not less than 0.5% and not more than 0.6% C), whereby the uniform hardness is kept over the entire part (not less than 550 [HV] and not more than 750 [HV]).

Then, as illustrated in Fig. 2D, griding treatment (griding process) of griding the entire surface of the pin material with a grinding stone 25 is performed, whereby the copper plating D is peeled off from the entire pin and the manufacturing of the joint pin 13 is completed.

In the above joint pin 13, the amount of carbon in the tip part B is reduced by the above decarburizing treatment, and its hardness is lower than that of the body part A not to be swaged. When connecting the roller chain, the joint pin 13 is flared and swaged by inserting the punch into the counterbore hole 19 formed at the tip of this pin. Since the portion to be swaged is low in hardness (not less than 500 [HV] and not more than 650 [HV]), the pin is swaged properly and reliably without generating cracks and the like. In this event, the cutting part 20 is formed to have a diameter slightly smaller than that of each pin hole of the outer plate 15, which facilitates insertion of the pin into the pin hole of the outer plate 15. Further, by swaging the cutting part 20, the thread of the cutting part 20 bites into the inner circumferential surface of the pin hole, whereby the joint pin 13 is reliably fitted and secured to the outer plate 15. Besides, by forming the concave groove 20a or the small diameter part in the above cutting part 20 by cutting, swaging can be performed further precisely and easily. The body part A that connects the left and right raised plate 14 and outer plate 15 as the joint pin 13 is made of high-carbon steel not subjected to the decarburizing treatment and has uniformly high hardness (not less than 550 [HV] and not more than 750 [HV]), and thus has high strength and durability. Thereby, the tensile strength of the roller chain that is connected using the joint pin can be improved, which makes the roller chain applicable to motorcycles with high engine size, for example.

Note that, although the joint pin 13 is generally used as a pin of the raised plate 14, the pin can be used by itself as a joint pin. In this case, since both ends of the joint pin are to be swaged, the hardness of both end parts of the joint pin is lowered by cutting and removing copper plating on these parts and subjecting them to decarburizing treatment. In addition, although this joint pin is favorable as the joint pin of the roller chain, the joint pin is applicable not only to this but also to another chain such as a bush chain or a silent chain.

### INDUSTRIAL APPLICABILITY

The present invention is applicable to a joint pin of a chain such as a roller chain and, in particular, applicable to a joint pin that is secured to an outer plate of the chain by being swaged.

The present invention is not limited to the above embodiment, and various changes and modifications are possible without departing from the spirit and scope of the present invention. Thus, the following claims are appended in order to make the scope of the present invention known to the public.

### REFERENCE SIGNS LIST

- 11: joint link
- 13: joint pin
- 14: raised plate
- 19: hole (counterbore hole)
- 20: cutting part
- 20a: small diameter part (concave groove)
- 30: tip surface
- A: body part
- AD: axial direction
- B: tip part
- D: copper plating
- L1: first outer diameter
- L2: second outer diameter

## Claims

1. A joint pin of a chain for connecting both end parts of the chain in an endless fashion, the joint pin comprising:
a tip part including:
a tip surface in an axial direction of the joint pin; and
a hole for swaging formed in the tip surface; and
a body part other than the tip part, wherein
the tip part has hardness of not less than 500 [HV] and not more than 650 [HV], and
the body part is constituted of carbon steel with not less than 0.5 [%] and not more than 0.6 [%] carbon and has hardness of not less than 550 [HV] and not more than 750 [HV].

2. The joint pin of a chain according to claim 1, wherein
the body part includes a first outer diameter, and
the tip part includes a small diameter part having a second outer diameter smaller than the first outer diameter.

3. The joint pin of a chain according to claim 2, wherein
the small diameter part is formed by cutting treatment.

4. The joint pin of a chain according to any one of claims 1 to 3, wherein
a central portion in a radial direction of the body part contains not less than 0.5 [%] and not more than 0.6 [%] carbon.

5. A method of manufacturing a joint pin of a chain for connecting both end parts of the chain in an endless fashion, the method comprising:
a plating step of plating the entire pin material made of high-carbon steel with not less than 0.5 [%] and not more than 0.6 [%] carbon;
a cutting step of cutting and removing the plating on an outer circumferential surface of a tip part in an axial direction of the plated pin material, and forming a hole in a tip surface in the axial direction of the pin material;
a decarburizing step of subjecting the pin material to decarburizing treatment to diffuse carbon from the outer circumferential surface of the tip part of the pin material from which the plating has been removed, and subjecting the pin material to heat treatment to reduce the amount of carbon at the tip part of the pin material and reduce hardness thereof; and
a grinding step of grinding an outer circumferential surface of a portion of the pin material other than the tip part to peel off the plating from the pin material.

6. The method of manufacturing a joint pin of a chain according to claim 5, wherein copper plating is applied in the plating step.

7. The method of manufacturing a joint pin of a chain according to claim 5 or 6, wherein
in the cutting step, any of a concave groove and a small diameter part is formed in the outer circumferential surface of the tip part of the pin material.
